# EUROPÄISCHE PATENTSCHRIFT

(11) **EP 1 912 001 B1**
(45) Veröffentlichungstag und Bekanntmachung des Hinweises auf die Patenterteilung: **27.02.2013**
(21) Anmeldenummer: 07016049.4
(22) Anmeldetag: 16.08.2007
(51) Int. Cl.: F16K 7/06

(54) **Quetschventil**
Pinch valve
Vanne à manchon

(30) Priorität: 13.10.2006 DE 102006048573
(43) Veröffentlichungstag der Anmeldung: 16.04.2008
(73) Patentinhaber: FESTO AG & Co. KG, 73734 Esslingen (DE)
(72) Erfinder: Kees, Ulrich, 66424 Homburg (DE)
(74) Vertreter: Abel, Martin

(56) Entgegenhaltungen:
- DE-A1- 2 941 278
- DE-A1- 3 445 740
- FR-A- 2 152 061
- JP-A- 58 046 271
- US-A- 3 830 462

## Beschreibung

Die Erfindung betrifft ein Quetschventil, mit einem eine flexible Umfangswand aufweisenden und an seinen beiden Enden jeweils einen radial abstehenden Befestigungsschlauch aufweisendem schlauchförmigen Ventilglied, das einen Durchgangskanal für ein Fluid definiert und im Bereich dessen Außenumfanges zum mehr oder weniger starken Zusammenquetschen der Umfangswand unter Ausführung einer Arbeitsbewegung quer zu der Ventilglied-Längsachse aufeinander zu und voneinander weg bewegbare Quetschelemente angeordnet sind, und mit einem das Ventilglied umgreifenden Beaufschlagungsglied, das radial au-βen über die Quetschelemente greifende, zur Ventilglied-Längsachse geneigte Beaufschlagungsflächen aufweist und das unter Ausführung einer Beaufschlagungsbewegung längs des Ventilgliedes bewegbar ist, um zum Hervorrufen der Arbeitsbewegung mit seinen Beaufschlagungsflächen auf die Quetschelemente einzuwirken, wobei das Beaufschlagungsglied ein das Ventilglied koaxial umschließender Beaufschlagungsring ist, der sich in einem ringförmigen, radial außen von einer umfangsseitigen Ventilgehäusewand umschlossenen Arbeitsraum befindet, und wobei bezüglich des Beaufschlagungsrings gesonderte Antriebsmittel vorhanden sind, durch die der Beaufschlagungsring mit einer die Beaufschlagungsbewegung steuernden Antriebskraft beaufschlagbar ist.

Ein aus der DE 2941278 C2 bekanntes Quetschventil ist als Kanülenanschlussstück ausgebildet, das in der Medizintechnik eingesetzt wird. Es enthält ein von einem Fluid durchströmbares schlauchförmiges Ventilglied, an dessen Außenumfang zwei radial bewegliche Quetschelemente angeordnet sind, die von einem klammerartigen Beaufschlagungsglied umgriffen werden. Das Beaufschlagungsglied ist als manuell betätigbarer Schieber ausgeführt, der mit schrägen Beaufschlagungsflächen an den Quetschelementen angreift und bei dessen Betätigung die Quetschelemente so aufeinander zu gerichtet verlagerbar sind, dass das Ventilglied lokal zusammengequetscht und der Fluiddurchfluss dadurch verringert oder komplett unterbunden wird.

Eine ähnliche Anordnung offenbart die DE 7500720 U. Bei einer möglichen Ausführungsform ist dort das Beaufschlagungsglied als Schiebehülse ausgebildet, und als Ventilglied kommt ein in eine Bohrung eingesteckter Schlauch zum Einsatz. Die Betätigung des Beaufschlagungsgliedes erfolgt wiederum manuell.

Auch bei dem Quetschventil der DE 3318817 A1 ist eine manuelle Betätigung des schlauchartigen Ventilgliedes vorgesehen. Über eine verdrehbare und verschiebbare Nockenstange kann auf ein Druckstück eingewirkt werden, um das Ventilglied mehr oder weniger stark zusammenzuquetschen.

Diese bekannten Quetschventile eignen sich zwar sehr gut für eine rein manuelle Betätigung. Eine kräftunterstützte Betätigung, beispielsweise mittels pneumatischer Antriebstechnik, ist hingegen nicht möglich. Eine solche ist jedoch in Fällen anzustreben, in denen beispielsweise eine ferngesteuerte Aktivierung vorgenommen werden soll - insbesondere auf dem Gebiet der Prozesstechnik -, oder bei denen es gilt, auch bei hohen Drücken des das Ventilglied durchströmenden Fluides eine zuverlässige Betätigung zu gewährleisten.

In dieser Hinsicht sind zwar aus der Produktinformation "Mechanische Quetschventile Typ BSV / Mechanical pinch valves type BSV" der AKO Armaturen & Separations GmbH, D-65468 Trebur-Astheim, Ausgabe 10/2001, bereits pneumatische Quetschventile bekannt, bei denen die Schließkraft durch eine Federkraft aufgebracht wird und das Öffnen mittels Druckluft erfolgt. Bedingt durch einen seitlichen Anbau der Antriebsmittel an das Ventilgehäuse ist dieses bekannte Quetschventil jedoch äußerst voluminös.

Die FR-A-2152061 offenbart ebenfalls bereits ein Quetschventil, das durch Fluidkraft betätigt wird. Bei dem darin anhand den Figuren 10 und 11 beschriebenen Ausführungsbeispiel ist ein schlauchformiges Ventilglied vorhanden, das von einem aus-Kautschuk bestehenden Quetschring umschlossen ist, der durch einen axial verschiebbaren Beaufschlagungsring radial verformbar ist. Die Betätigungskraft des Beaufschlagungsringes wird durch Kugeln auf den Quetschring überträgen. Das Absperren des Durchgangskanales des Ventilgliedes erfolgt dadurch, dass der Quetschring die Umfangswand des Ventilgliedes gegen den Außenumfang eines kugelförmigen Absperrgliedes drückt. Da dieses Absperrglied im Innern des Durchgangskanals angeordnet ist, bildet es auch im geöffneten Zustand des Quetschventils ein Strömungshindernis, das die Strömungsrate begrenzt. Außerdem besteht durch die begrenzte Verformbarkeit des flexiblen Quetschringes eine Einschränkung des für die Fluidströmung maximal freigebbaren Kanalquerschnittes. Und nicht zuletzt ist der axial bewegliche Beaufschlagungsring von außen her frei zugänglich, sodass eine gewisse Verschmutzungs- und Verletzungsgefahr besteht.

Die US-A-3830462 beschreibt ein Quetschventil der eingangs genannten Art, dessen Funktionsprinzip mit demjenigen der FR-A-2152061 vergleichbar ist, wobei allerdings der Beaufschlagungsring in einem vom Ventilgehäuse umschlossenen Raum angeordnet ist, der zur Betätigung mit einem Druckfluid beaufschlagt werden kann.

Es ist eine Aufgabe der vorliegenden Erfindung, ein für die Aufbringung hoher Betätigungskräfte geeignetes Quetschventil zu schaffen, das über kompakte Abmessungen verfügt.

Zur Lösung dieser Aufgabe ist bei einem Quetschventil der eingangs genannten Art vorgesehen, dass zwei sich bezüglich der Ventilglied-Längsachse diametral gegenüberliegende Quetschelemente vorhanden sind, die sich gegenüberliegende Wandabschnitte der Umfangswand fluiddicht gegeneinander pressen können, um den Durchgangskanal abzusperren, und dass das Quetschventil zwei jeweils von einem Fluidkanal durchsetzte Anschlussstücke aufweist, zwischen denen sich das schlauchförmige Ventilglied erstreckt, wobei sich das schlauchförmige Ventilglied mit seinen Befestigungsflanschen jeweils axial an dem sich anschließenden Anschlussstück abstützt.

Die ringförmige Gestaltung des Beaufschlagungsgliedes erleichtert eine symmetrische Krafteinleitung, was vor allem bei hohen Stellkräften von Vorteil ist. Durch die Unterbringung in einem Arbeitsraum ist der Beaufschlagungsring zur Umgebung hin abgeschirmt, sodass die Verletzungs- und Verschmutzungsgefahr reduziert ist. Durch die zum Ventilglied koaxiale Anordnung des Beaufschlagungsringes besteht die Möglichkeit zur Realisierung eines Quetschventils mit quer zur Ventilglied-Längsachse sehr geringen Abmessungen. Die bezüglich des Beaufschlagungsrings gesonderten Antriebsmittel ermöglichen die Auferlegung einer bei Bedarf hohen Antriebskraft auf den Beaufschlagungsring, wobei sich ein unmittelbares manuelles Ergreifen des Beaufschlagungsringes vermeiden lässt.

Das schlauchförmige Ventilglied erstreckt sich zwischen zwei Anschlussstücken des Quetschventils, wobei sich zur gehäusefesten Fixierung und zweckmäßigerweise auch zur gleichzeitigen Abdichtung des Ventilgliedes gegenüber den Anschlussstücken die an beiden axialen Enden des Ventilgliedes vorhandenen und zweckmäßigerweise mit Abdichtmitteln ausgestatteten Befestigungsflansche in axialer Richtung an einer axial orientierten Gegenfläche des jeweils zugeordneten Anschlussstückes abstützen.

Vorteilhafte Weiterbildungen der Erfindung gehen aus den Unteransprüchen hervor.

Zweckmäßigerweise sind die Antriebsmittel ausgebildet, um mit einer fluidischen Antriebskraft auf den Beaufschlagungsring einzuwirken. Eine pneumatische Bauart wird bevorzugt. Gleichwohl wären prinzipiell auch andere Antriebsmechanismen denkbar, beispielsweise elektromagnetischer.Art und/oder eine Betätigung mit Hebelübersetzung.

In Verbindung mit fluidischen Antriebsmitteln befindet sich in dem Arbeitsraum zweckmäßigerweise axial benachbart zu dem Beaufschlagungsring eine gesteuert mit einem Antriebsfluid beaufschlagbare Antriebskammer, wobei das Antriebsfluid je nach Ausgestaltung direkt oder indirekt auf den Beaufschlagungsring einwirken kann.

Die Fluidbeaufschlagung erfolgt insbesondere über einen das Ventilgehäuse des Quetschventils zur Außenfläche hin durchsetzenden Steuerkanal, dessen äußere Kanalmündung mit Anschlussmitteln für eine Fluidleitung ausgestattet sein kann.

Eine indirekte Fluidbeaufschlagung des Betätigungsgliedes mittels eines zusätzlichen Antriebskolbens wird bevorzugt.

Der Antriebskolben lässt sich optimal hinsichtlich des Ventilgehäuses abdichten, sodass an dem Beaufschlagungsring keine Abdichtmaßnahmen erforderlich sind und dieser hinsichtlich der Beaufschlagungsfunktion optimal ausgelegt werden kann.

Der Beaufschlagungskolben kann zwar fest mit dem Beaufschlagungsring verbunden sein und mit diesem eine Baueinheit bilden. Bevorzugt wird jedoch eine Bauform, bei der der Antriebskolben ein bezüglich des Beaufschlagungsrings separates Bauteil ist, das insbesondere unabhängig von dem Beaufschlagungsring verschiebbar ist. In diesem Fall kann der Antriebskolben üblicherweise nur Drückkräfte, jedoch keine Zugkräfte auf den Beaufschlagungsring ausüben. Die damit verbundene Entkopplung ermöglicht quer zur Ventilglied-Längsachse voneinander unabhängige Relativbewegungen zwischen den beiden Komponenten, sodass Reaktionskräfte, die aus der Kraftumlenkung in die Quetschelemente resultieren, vom Antriebskolben ferngehalten werden und dessen Dichtungen und Gleitflächen keinem erhöhten Verschleiß unterliegen.

Bevorzugt umfasst der Beaufschlagungsring einen ringförmigen Grundkörper, von dem an einer Stirnseite zwei sich diametral gegenüberliegende Beaufschlagungsflügel axial wegragen, an denen die Beaufschlagungsflächen angeordnet sind und die die Quetschelemente übergreifen. Auf diese Weise ergibt sich eine präzise Verschiebeführung des Beaufschlagungsringes bei gleichzeitig minimiertem Materialaufwand.

Eine ebenfalls in der Arbeitskammer untergebrachte Federeinrichtung kann eine der fluidischen Antriebskraft entgegenwirkende Feder-Rückstellkraft liefern. Die Federeinrichtung ist vorzugsweise koaxial bezüglich des Ventilglieds angeordnet und hierbei in axialer Verlängerung des Beaufschlagungsringes. Sie befindet sich zweckmäßigerweise auf der dem Antriebsraum axial entgegengesetzten Seite des Beaufschlagungsringes.

Durch die Federeinrichtung kann der Beaufschlagungsring in eine Grundstellung vorgespannt sein, aus der eine entsprechende Grundstellung der Quetschelemente resultiert. Diese Grundstellung ist zweckmäßigerweise eine Schließstellung, bei der die Quetschelemente die Umfangswand des Ventilgliedes so weit zusammengequetscht haben, dass der Fluiddurchgang durch den das Ventilglied durchsetzenden Fluidkanal unterbrochen ist.

Eine besonders einfache Herstellung ist möglich, wenn der Arbeitsraum kreiszylindrisch ausgebildet ist und in seiner Längsrichtung keine Abstufungen aufweist. Dadurch können die einzelnen Komponenten auch sehr einfach axial eingebaut werden.

Um zu verhindern, dass das schlauchförmige Ventilglied von dem in ihm herrschenden Fluiddruck unkontrolliert aufgebläht wird, ist es zweckmäßigerweise zumindest im Bereich seiner flexiblen Umfangswand von einer hülsenartigen Abstützeinrichtung koaxial umschlossen. Der Innenquerschnitt der Abstützeinrichtung gibt mithin den maximalen Durchflussquerschnitt des Ventilgliedes vor.

In bevorzugter Ausgestaltung enthält die Abstützeinrichtung zwei Abstützhülsen, deren einander zugewandte Stirnflächen einen Führungsspalt definieren, in dem die Quetschelemente zur Ausführung ihrer Arbeitsbewegung radial verschiebbar geführt sind.

Die Führungsmaßnahmen sind insbesondere so ausgeführt, dass eine Linearführung für die Quetschelemente vorhanden ist, die gleichzeitig rechtwinkelig zur Arbeitsbewegung und zur Ventilglied-Längsachse eine Abstützung der Quetschelemente bewirkt, sodass diese in ihrer Relativposition bezüglich des Ventilglieds stabilisiert sind und auch keine Verkantungen auftreten können.

Die den Arbeitsraum umfangsseitig begrenzende Ventilgehäusewand hat zweckmäßigerweise eine kreiszylindrische Außenkontur. Zweckmäßigerweise ist sie außerdem Bestandteil eines hülsenförmigen Aufnahmekörpers, der die restlichen Komponenten des Quetschventils aufnimmt. Diese können insbesondere so ausgebildet sein, dass sie in axialer Richtung in den Aufnahmekörper einsteckbar sind. In diesem Zusammenhang ist es von Vorteil, wenn mehrere der Ventilbestandteile zu einer axial in den Aufnahmekörper einschiebbaren Montageeinheit zusammengefasst sind. Die gegebenenfalls vorhandene Federeinrichtung ist zweckmäßigerweise Bestandteil dieser Montageeinheit, wobei sie innerhalb der Montageeinheit vorgespannt sein kann, sodass beim Einsetzvorgang selbst kein umständliches Spannen der Federeinrichtung erforderlich ist.

Bei dem Ventilglied handelt es sich zweckmäßigerweise um ein gummielastisches Formteil mit einer im unbelasteten Ausgangszustand von einer rein kreiszylindrischen Gestaltung abweichenden Formgebung. Bevorzugt ist die Umfangswand so gestaltet, dass sie allein aufgrund ihrer eigenen Formstabilität eine sich von axial außen her in Richtung zum Angriffsbereich der Quetschelemente hin verjüngende Formgebung aufweist. Die Umfangswand kann in den mit den Quetschelementen kooperierenden Umfangsabschnitten abgeflacht sein, was insbesondere dann von Vorteil ist, wenn der das Ventilglied kontaktierende Quetschabschnitt der Quetschelemente eine lineare Erstreckung quer zur Richtung der Arbeitsbewegung aufweist. Somit können übermäßige Verformungen der Umfangswand des Ventilgliedes vermieden werden.

Bei dem Ventilglied handelt es sich vorzugsweise insgesamt um ein einstückiges, aus Material mit gummielastischen Eigenschaften bestehendes Formteil. Als Material kommt insbesondere ein Elastomermaterial in Frage.

Nachfolgend wird die Erfindung anhand der beiliegenden Zeichnung näher erläutert. In dieser zeigen:
- Figur 1: eine bevorzugte erste Bauform des erfindungsgemäßen Quetschventils in der maximalen Offenstellung und in einem Längsschnitt gemäß Schnittlinie I-I aus Figur 3,
- Figur 2: das Quetschventil aus Figur 1 in der Schließstellung und in einem Längsschnitt gemäß Schnittlinie II-II aus Figur 4,
- Figur 3: einen Querschnitt gemäß Schnittlinie III-III durch das Quetschventil der Figur 1,
- Figur 4: einen Querschnitt gemäß Schnittlinie IV-IV durch das in Figur 2 abgebildete Quetschventil,
- Figur 5: einen Ausschnitt des Quetschventils aus Figur 1 gemäß Schnittlinie V-V und
- Figur 6: zu einer Montageeinheit zusammengefasste Komponenten des Quetschventils vor dem Einsetzen in einen zum Ventilgehäuse gehörenden hülsenförmigen Aufnahmekörper.

Das in seiner Gesamtheit mit Bezugsziffer 1 bezeichnete Quetschventil enthält ein Ventilgehäuse 2, das in seinem Innern einen kreiszylindrisch konturierten, in axialer Richtung zweckmäßigerweise keinerlei Abstufungen aufweisenden Arbeitsraum 3 definiert.

Bestandteil des Ventilgehäuses 2 ist ein hülsenförmiger Aufnahmekörper 4, der eine im Wesentlichen hohlzylindrische Ventilgehäusewand 5 definiert, die den Arbeitsraum 3 umfangsseitig begrenzt.

An eine Stirnseite der umfangsseitigen Ventilgehäusewand 5 schließt sich eine nach Art einer gelochten Scheibe ausgeführte Bodenwand 6 mit einer zentralen Durchbrechung 7 an. Auch sie ist zweckmäßigerweise Bestandteil des hülsenförmigen Aufnahmekörpers 4.

Mit ihrer der Bodenwand 6 entgegengesetzten Stirnseite definiert die Ventilgehäusewand 5 eine Montageöffnung 8. Durch diese hindurch werden die weiteren Bestandteile des Quetschventils 1 in den Aufnahmekörper 4 eingesetzt.

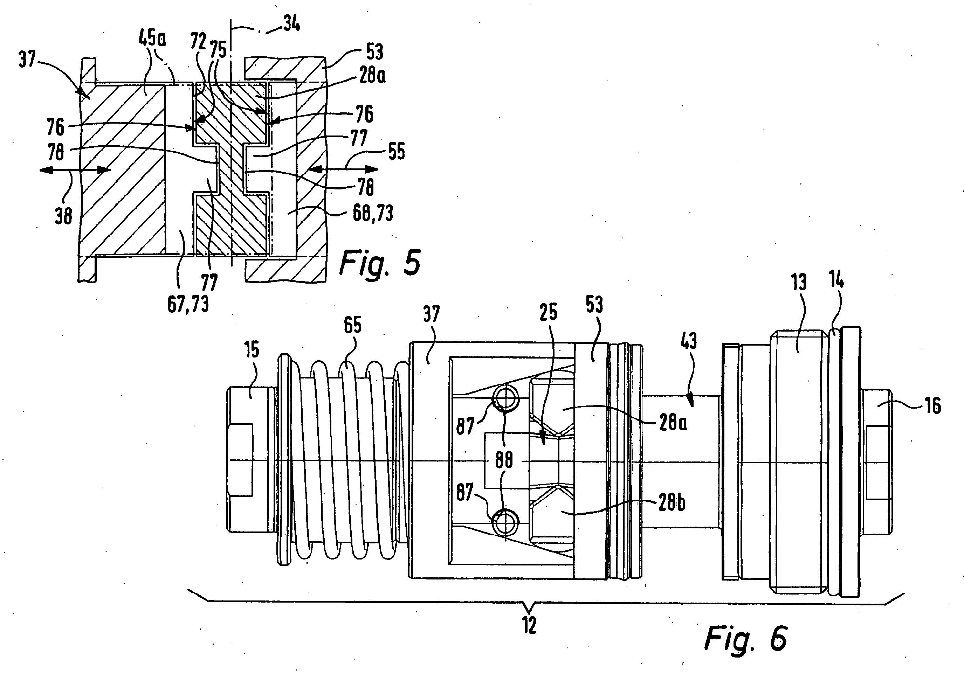

Diese weiteren Bestandteile sind gesondert nochmals in Figur 6 abgebildet. Sie sind dort zu einer insgesamt mit Bezugsziffer 12 bezeichneten Montageeinheit zusammengefasst, die durch die Montageöffnung 8 hindurch als Baueinheit in den Aufnahmekörper 4 einsetzbar ist.

Ein in die Montageöffnung 8 eingesetztes und insbesondere eingeschraubtes Abschlusselement 13 bildet die der Bodenwand 6 axial gegenüberliegende stirnseitige Begrenzung des Arbeitsraumes 3. Exemplarisch verfügt das Abschlusselement 13 über ein Außengewinde, über das es in einen Innengewindeabschnitt der Montageöffnung 8 eingeschraubt ist. Ein dazwischen angeordneter Dichtungsring 14 sorgt für eine fluiddichte Verbindung.

Im Bereich der beiden axialen Endabschnitte des Ventilgehäuses 2 befinden sich ein erstes und ein zweites Anschlussstück 15, 16. Beide Anschlussstücke 15, 16 sind axial von je einem Fluidkanal 17 durchsetzt.

Bevorzugt stützt sich das erste Anschlussstück 15 an der axial orientierten Innenfläche der Bodenwand 6 ab und greift durch die zentrale Durchbrechung 7 hindurch. Zur Abstützung dient ein radial abstehender Abstützflansch 18, der zentrierend in eine Aussparung 22 der Bodenwand 6 eintaucht.

Das zweite Anschlussstück 16 ist zweckmäßigerweise in das Abschlusselement 13 eingesetzt. Dieses kann als Ringkörper ausgebildet sein und über eine zentral angeordnete axiale Durchbrechung 23 verfügen, die mit einem Innengewinde versehen ist, in das das zweite Anschlussstück 16 mit einem Außengewinde eingeschraubt ist.

Zwischen den beiden Anschlussstücken 15, 16 erstreckt sich koaxial ein mit einer flexiblen Umfangswand 24 ausgestattetes schlauchförmiges Ventilglied 25. Dieses steht mit den beiden Anschlussstücken 15, 16 in fluiddichter Verbindung und enthält einen von der Umfangswand 24 umschlossenen Durchgangskanal 26, der mit den Fluidkanälen 17 der beiden Anschlussstükke 15, 16 kommuniziert.

Über je eines der Anschlussstücke 15 oder 16 kann zu steuerndes fluidisches Druckmedium eingespeist werden, das durch den Durchgangskanal 26 zum jeweils anderen Anschlussstück 16 oder 15 gelangt und über dieses das Quetschventil 1 wieder verlässt. An den beiden Anschlussstücken 15, 16 angeordnete Befestigungsmittel 27, beispielsweise in die Fluidkanäle 17 eingebrachte Innengewinde, erlauben den Anschluss von Fluidleitungen, die das zu steuernde Fluid heranführen beziehungsweise abführen.

Im Bereich des Außenumfanges der Umfangswand 24 des Ventilgliedes 25 sind zwei Quetschelemente 28a, 28b angeordnet. Sie liegen in Richtung der Ventilglied-Längsachse 32 auf gleicher axialer Höhe, und zwar sich bezüglich der Ventilglied-Längsachse 32 diametral gegenüberliegend. Beide Quetschelemente 28a, 28b sind unabhängig voneinander quer und insbesondere rechtwinkelig zur Ventilglied-Längsachse 32 beweglich, wobei die Bewegungen als Arbeitsbewegungen 33 bezeichnet seien, die in der Zeichnung durch Doppelpfeile angedeutet sind.

Die Arbeitsbewegungen 33 sind zweckmäßigerweise Linearbewegungen mit zusammenfallenden Achsrichtungen.

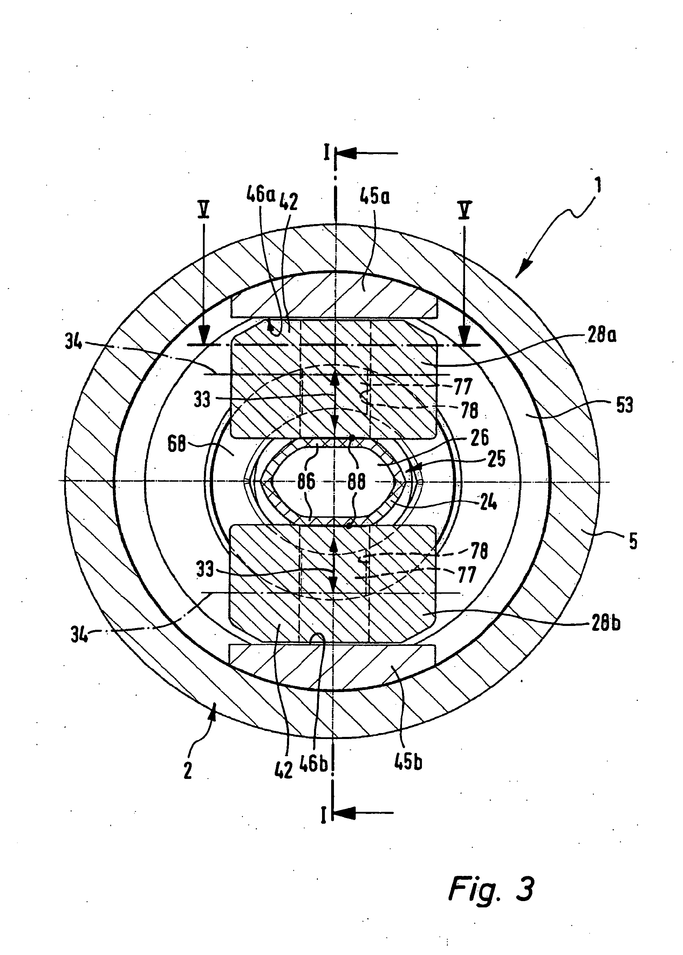

Wie man insbesondere auch den Figuren 3 bis 5 entnehmen kann, sind die Quetschelemente 28a, 28b als Längselemente mit zur Achsrichtung der Arbeitsbewegung 33 und zur Ventilglied-Längsachse 32 senkrechter Längsachse 34 ausgebildet. Somit verlagern sich die Quetschelemente 28a, 28b bei ihren Arbeitsbewegungen 33 in einer gemeinsamen, zur Ventilglied-Längsachse 32 rechtwinkeligen Radialebene 35.

Die Quetschelemente 28a, 28b dienen zum mehr oder weniger starken Zusammenquetschen der Umfangswand 24. Ihre Bewegung erfolgt stets gegensinnig, entweder aufeinander zu oder voneinander weg gerichtet.

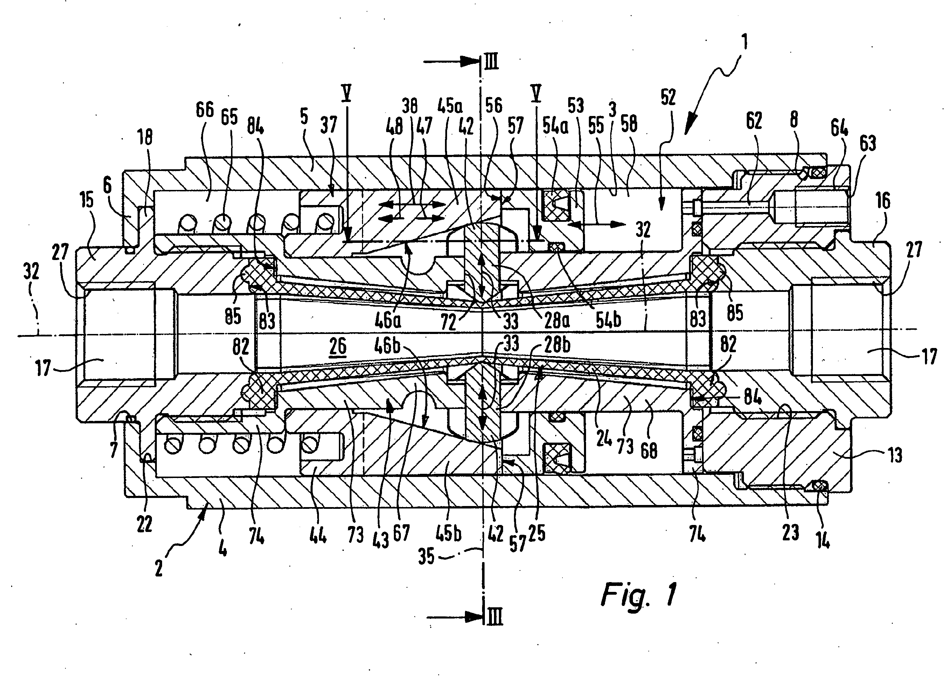

In der in Figuren 1 und 3 gezeigten Grundstellung sind die beiden Quetschelemente 28a, 28b in Richtung der Arbeitsbewegungen 33 weitestmöglich voneinander entfernt, sodass die Umfangswand 24 keine oder eine nur geringe radiale Quetschung erfährt und der freigegebene Querschnitt des Durchgangskanals 26 ein Maximum aufweist.

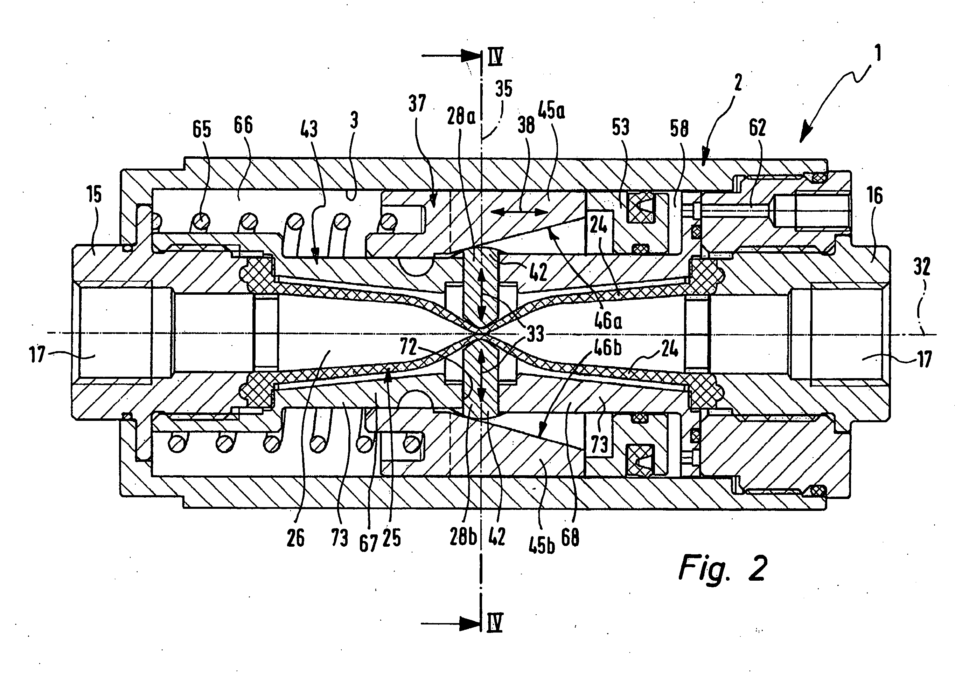

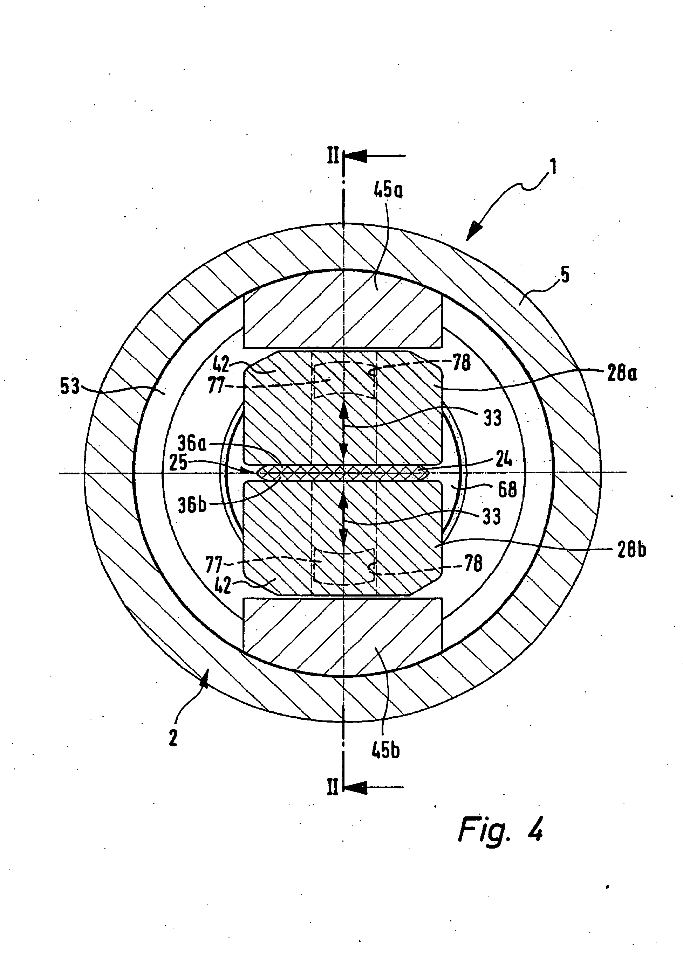

Die Quetschelemente 28a, 28b können unter Zusammenquetschen der Umfangswand 24 so weit aneinander angenähert werden, bis sie die in Figuren 2 und 4 gezeigte Endstellung einnehmen, die daraus resultiert, dass die Umfangswand 24 maximal zusammengequetscht ist und die sich in Richtung der Arbeitsbewegungen 33 gegenüberliegenden Wandabschnitte 36a, 36b der Umfangswand 24, die von den beiden Quetschelementen 28a, 28b beaufschlagt sind, fluiddicht zusammengepresst sind. Der Fluiddurchgang durch den Durchgangskanal 26 ist somit komplett abgesperrt, und das Ventilglied 25, das in Figuren 1 und 3 die maximale Offenstellung eingenommen hatte, befindet sich nun in der Schließstellung.

Zwischenstellungen der Quetschelemente 28a, 28b zwischen der Grundstellung und der Endstellung ermöglichen die stufenlose Vorgabe von unterschiedlichen Strömungsquerschnitten, die zwischen der maximalen Offenstellung und der Schließstellung des Ventilgliedes 25 liegen.

Den Quetschelementen 28a, 28b wird die zum Ausführen der Arbeitsbewegungen 33 erforderliche Stellkraft durch einen in seiner Gesamtheit mit Bezugsziffer 37 bezeichneten Beaufschlagungsring auferlegt. Dieser nimmt eine das Ventilglied 25 koaxial umschließende Position ein. Er ist in Richtung der Ventilglied-Längsachse 32 unter Ausführung einer durch einen Doppelpfeil angedeuteten Beaufschlagungsbewegung 38 relativ zum Ventilgehäuse 2 und zum Ventilglied 25 bewegbar, wobei er mit den in Achsrichtung der Arbeitsbewegungen 33 vom Ventilglied 25 wegweisenden äußeren Endabschnitten 42 der Quetschelemente 28a, 28b zusammenwirkt.

Der Beaufschlagungsring 37 befindet sich in dem Arbeitsraum 3. Dieser ist ringförmig gestaltet, wobei er radial außen von der umfangsseitigen Ventilgehäusewand 5 und radial innen von einer das Ventilglied 25 koaxial umschließenden hülsenartigen Abstützeinrichtung 43 begrenzt ist. Letztere erstreckt sich zwischen den beiden axialen Endabschnitten des Ventilgehäuses 2 und hat unter anderem den Zweck, das Ventilglied 25 zumindest im Bereich seiner flexiblen Umfangswand 24 radial abzustützen und an einem unerwünschten Aufblähen durch den im Durchgangskanal 26 anstehenden Fluiddruck zu hindern. Die Innenkontur der hülsenartigen Abstützeinrichtung 43 entspricht der Außenkontur der Umfangswand 24 des Ventilgliedes 25, die diese aufweisen soll, wenn sich die Quetschelemente 28a, 28b in ihrer Grundstellung gemäß Figuren 1 und 3 befinden.

Der Beaufschlagungsring 37 ist mit seinem Innenumfang auf dem Außenumfang der Abstützeinrichtung 43 und/oder mit seinem Außenumfang am Innenumfang der umfangsseitigen Ventilgehäusewand 5 verschiebbar geführt. Als mit der Abstützeinrichtung 43 kooperierendes Führungselement fungiert dabei ein ringförmiger Grundkörper 44 des Beaufschlagungringes 37, der axial zwischen einerseits den beiden Quetschelementen 28a, 28b und andererseits einem der axialen Endabschnitte des Ventilgehäuses 2 angeordnet ist. Von diesem Grundkörper 44 ragen an der den Quetschelementen 28a, 28b zugewandten Seite zwei sich bezüglich der Ventilglied-Längsachse 32 diametral gegenüberliegende Beaufschlagungsflügel 45a, 45b axial weg, die jeweils eines der Quetschelemente 28a, 28b radial außen axial übergreifen. An der der Ventilglied-Längsachse 32 zugewandten Innenseite ist jeder Beaufschlagungsflügel 45a, 45b mit einer sich in Richtung der Beaufschlagungsbewegung 38 erstreckenden, bezüglich der Ventilglied-Längsachse 32 jedoch geneigten Beaufschlagungsfläche 46a, 46b versehen, die mit der nach radial außen orientierten, bevorzugt zumindest partiell ballig gestalteten Außenfläche des äußeren Endabschnittes 42 des zugeordneten Quetschelementes 28a, 28b in Berührkontakt steht. Bevorzugt sind die Beaufschlagungsflächen 46a, 46b eben, mit einer zu der Längsachse 34 parallelen Ausdehnungskomponente. Die Beaufschlagungsfläche 46a, 46b entfernt sich zum freien Ende des Beaufschlagungsflügels 45a, 45b hin zunehmend von der Ventilglied-Längsachse 32.

Die Beaufschlagungsbewegung 38 des Beaufschlagungsringes 37 besitzt eine zu den Quetschelementen 28a, 28b hin orientierte Aktivierungsrichtung 47 und eine dieser entgegengesetzte Deaktivierungsrichtung 48. Bei Verlagerung in der Aktivierungsrichtung 47 werden die Quetschelemente 28a, 28b durch die schrägen Beaufschlagungsflächen 46a, 46b allmählich in Richtung ihrer Endstellung gemäß Figuren 2 und 4 verlagert. Bewegt sich der Beaufschlagungsring 37 in der Deaktivierungsrichtung 48, werden die Quetschelemente 28a, 28b durch die sich infolge des in dem Durchgangskanal 26 herrschenden Fluiddruckes aufweitende Umfangswand 24 in Richtung der Grundstellung nach radial außen geschoben.

Somit kann durch axiale Positionierung des Beaufschlagungsringes 37 der vom Durchgangskanal 26 zur Verfügung gestellte Strömungsquerschnitt und somit die Durchflussrate des zu steuernden Fluides variabel vorgegeben werden.

Die für die Beaufschlagungsbewegung 38 verantwortliche Antriebskraft kann über bezüglich des Beaufschlagungsringes 37 gesonderte Antriebsmittel 52 des Quetschventils 1 aufgebracht werden. Bevorzugt sind diese Antriebsmittel 52 zur Ausübung einer fluidischen Antriebskraft ausgebildet, wobei die Fluidkraft vorzugsweise von unter einem entsprechenden Druck stehender Druckluft geliefert wird.

Das Quetschventil 1 kann so ausgebildet werden, dass das die Antriebskraft liefernde Antriebsfluid unmittelbar auf den Beaufschlagungsring 37 einwirken kann. Bevorzugt wird jedoch eine Bauform, bei der das Antriebsfluid auf einen bezüglich des Beaufschlagungsrings 37 gesonderten Antriebskolben 53 einwirkt, der seinerseits dann mechanisch mit dem Beaufschlagungsring 37 kooperiert.

Zweckmäßigerweise befindet sich der Antriebskolben 53 auf der dem Beaufschlagungsring 37 entgegengesetzten Axialseite der beiden Quetschelemente 28a, 28b. Er ist als Ringkolben ausgebildet, der das Ventilglied 25 und die dieses umschließende Abstützeinrichtung 43 koaxial umschließt und der zu einer durch einen Doppelpfeil angedeuteten Antriebsbewegung 55 in Richtung der Ventilglied-Längsachse 32 antreibbar ist.

Der Antriebskolben 53 kann mit seiner dem Beaufschlagungsring 37 zugewandten Stirnfläche 56 drückend auf den Beaufschlagungsring 37 einwirken. Vorliegend geschieht dies durch einen Berührkontakt zwischen der vorgenannten Stirnfläche 56 und den dieser zugewandten Stirnflächen 57 der Beaufschlagungsflügel 45a, 45b. Hierbei handelt es sich zweckmäßigerweise um einen losen Kontakt ohne feste Verbindung. Theoretisch kann sich also der Antriebskolben 53 unabhängig vom Beaufschlagungsring 37 bewegen, was Relativbewegungen ermöglicht, die eine gegenseitige, möglicherweise einen Verschleiß fördernde Einflussnahme ausschließen.

Der Antriebskolben 53 begrenzt eine auf der dem Beaufschlagungsring 37 entgegengesetzten Axialseite liegende Antriebskammer 58, bei der es sich um einen Teilraum des Arbeitsraumes 3 handelt. Folglich ist auch die Antriebskammer 58 ringförmig ausgebildet. Über einen in sie einmündenden fluidischen Steuerkanal 62 kann die Antriebskammer 58 gesteuert mit einem Antriebsfluid beaufschlagt werden, um die Antriebsbewegung 55 in die eine oder andere Richtung hervorzurufen und demzufolge auch die daraus resultierende Beaufschlagungsbewegung 38 des Beaufschlagungsringes 37.

Die dem Antriebskolben 53 axial entgegengesetzte Begrenzung der Antriebskammer 58 übernimmt das Abschlusselement 13.

Der Steuerkanal 62 mündet zweckmäßigerweise dem Antriebskolben 53 axial gegenüberliegend in die Antriebskammer 58 ein. Die entgegengesetzte Kanalmündung 63 des Steuerkanals 62 befindet sich an der Außenfläche des Ventilgehäuses 2 und insbesondere an der Stirnfläche des Abschlusselementes 13. Dort können der Kanalmündung 63 Anschlussmittel 64 zugeordnet sein, die beispielhaft von einem Innengewinde gebildet sind und die das Anschließen einer Fluidleitung gestatten, über die das Antriebsfluid zu- und/oder abgeführt werden kann. Für die Ansteuerung wird in der Regel eine elektrisch ansteuerbare Steuerventileinrichtung verwendet, die eine Verbindung des Steuerkanals 62 mit wahlweise der Atmosphäre oder einer Druckquelle hervorrufen kann, die in der Zeichnung jedoch nicht weiter abgebildet ist.

Von dem Antriebskolben 53 getragene ringförmige Dichtungsmittel 54a, 54b, die gleitverschieblich an der Innenfläche der umfangsseitigen Ventilgehäusewand 5 und an der Außenfläche der hülsenartigen Abstützeinrichtung 43 anliegen, sind vorgesehen, um einen Fluidübertritt zum Bereich des Beaufschlagungsringes 37 zu verhindern.

Es wäre prinzipiell möglich, eine feste Verbindung zwischen dem Beaufschlagungsring 37 und dem Antriebskolben 53 vorzusehen oder diese beiden Komponenten gar einstückig miteinander auszubilden. Durch die Trennung wird jedoch neben der schon erläuterten vorteilhaften kinematischen Entkopplung auch die Montage auf der hülsenartigen Abstützeinrichtung 43 erleichtert.

Der Antriebskolben 53 kann beim Ausführungsbeispiel nur in der Deaktivierungsrichtung 48 wirksame Drückkräfte auf den Beaufschlagungsring 37 ausüben. Entgegengesetzt orientierte Kräfte vermag er nicht auf den Beaufschlagungsring 37 zu übertragen. Für die Antriebskraft in der Aktivierungsrichtung 47 sorgt zweckmäßigerweise eine ebenfalls in dem Arbeitsraum 3 untergebrachte Federeinrichtung 65, bei der es sich zweckmäßigerweise um eine mechanische Federeinrichtung handelt, vorzugsweise eine Druckfedereinrichtung. Auch eine Fluidfeder könnte hier eingesetzt werden, insbesondere eine Luftfeder.

Die Federeinrichtung 65 ist in einer Federkammer 66 untergebracht, bei der es sich um einen Teilraum des Arbeitsraumes 3 handelt, welcher sich axial zwischen dem Beaufschlagungsring 37 und der Bodenwand 6 befindet.

Die Federeinrichtung 65 ist bezüglich der Ventilglied-Längsachse 32 koaxial angeordnet und umschließt die hülsenartige Abstützeinrichtung 43. Axial einenends stützt sie sich im Bereich der Bodenwand 6 am Ventilgehäuse 2 ab, axial andernends drückt sie gegen den Beaufschlagungsring 37. Somit ist der Beaufschlagungsring 37 durch die Federeinrichtung 65 ständig in der Aktivierungsrichtung 47 und mithin im Sinne eines Zusammenquetschens des Ventilgliedes 25 beaufschlagt. Soll also das Ventilglied 25 in Richtung der Schließstellung verformt werden, kann dies durch ein Ablassen des Antriebsfluides aus der Antriebskammer 58 hervorgerufen werden, da dies ein Zurückweichen des Antriebskolbens 53 ermöglicht. Dies hat auch den Vorteil, dass das Ventilglied 25 automatisch in die Schließstellung gequetscht wird, wenn aufgrund einer Fehlfunktion der in der Antriebskammer 58 herrschende Fluiddruck abfallen sollte.

Um das Ventilglied 25 zu öffnen, wird das Arbeitsfluid so in die Antriebskammer 58 eingespeist, dass sich der Antriebskolben 53 in der Deaktivierungsrichtung 48 verlagert und durch ihn der Beaufschlagungsring 37 entgegen der durch die Federeinrichtung 65 aufgebrachten Federkraft zurückgeschoben wird.

Die Abstützeinrichtung 43 ist endseitig im Bereich der beiden Anschlussstücke 15, 16 gehäusefest fixiert. Bevorzugt umfasst sie zwei unter koaxialer Ausrichtung axial aufeinanderfolgende Abstützhülsen 67, 68, die unter Bildung eines die Quetschelemente 28a, 28b aufnehmenden Führungsspaltes 72 axial zueinander beabstandet sind. In diesem Führungsspalt 72 sind die Quetschelemente 28a, 28b in Richtung ihrer Arbeitsbewegungen 33 verschiebbar geführt. Bevorzugt enthält jede Abstützhülse 67, 68 einen das Ventilglied 25 umschließenden und stirnseitig den Führungsspalt 72 begrenzenden Abstützabschnitt 73 und einen den dem Führungsspalt 72 axial entgegengesetzten Endabschnitt bildenden Halteabschnitt 74.

Bevorzugt ist der der Bodenwand 6 zugeordnete Halteabschnitt 74 nach Art eines Rohrstutzens ausgeführt und mit einem Innengewinde versehen, über das er auf ein Außengewinde des axial in den Aufnahmekörper 4 hineinragenden Anschlussstückes 15 aufgeschraubt ist.

Der Halteabschnitt 74 der anderen Abstützhülse 68 ist zweckmäßigerweise flanschartig ausgebildet, wobei er sich an der zugewandten Stirnfläche des Abschlusselementes 13 abstützt. Der Steuerkanal 62 durchsetzt auch dessen flanschartigen Halteabschnitt 74.

Die den Führungsspalt 72 begrenzenden Stirnflächen der beiden Abstützhülsen 67, 68 sind mit je einer in Richtung der Arbeitsbewegungen 33 ausgerichteten ersten Linearführungsstruktur 75 versehen. Diese kann insbesondere über zwei sich diametral gegenüberliegende Axialvorsprünge 77 verfügen.

Die Quetschelemente 28a, 28b sind ihrerseits an den den ersten Linearführungsstrukturen 75 zugewandten Seiten mit je einer zur ersten Linearführungsstruktur 75 komplementären zweiten Linearführungsstruktur 76 versehen. Diese enthält exemplarisch jeweils eine in Richtung der Arbeitsbewegung 33 durchgehende schlitzartige Axialvertiefung 78, die in den gegenüberliegenden Axialvorsprung 77 gleitverschieblich eintaucht.

Mithin stehen die Quetschelemente 28a, 28b durch das Zusammenwirken der ersten und zweiten Linearführungsstrukturen 75, 76 in linearem Verschiebeeingriff mit den Abstützhülsen 67, 68. Dieser Verschiebeeingriff gewährleistet die Ausführung der Arbeitsbewegungen 33, sorgt jedoch gleichzeitig für eine Fixierung der Quetschelemente 28a, 28b in Richtung ihrer Längsachsen 34.

Somit ist gewährleistet, dass die Quetschelemente 28a, 28b bei ihren Arbeitsbewegungen 33 nicht verkanten und auch stets die gewünschte Relativposition bezüglich des Ventilglieds 25 einnehmen.

Bei dem Ventilglied 25 handelt es sich vorzugsweise um ein zumindest im Bereich seiner Umfangswand 24 und vorzugsweise insgesamt gummielastisches Formteil. Zweckmäßigerweise handelt es sich um einen einstückigen, aus Material mit gummielastischen Eigenschaften bestehenden Körper aus Gummi oder Elastomermaterial. Es kann somit äußerst kostengünstig hergestellt werden.

Zur Fixierung im Quetschventil 1 ist das Ventilglied 25 im Bereich seiner beiden Endabschnitte zweckmäßigerweise mit je einem radial abstehenden Befestigungsflansch 82 versehen. An diesen schließt sich, insbesondere einstückig, die elastisch verformbare Umfangswand 24 an.

Die beiden Befestigungsflansche 82 stützen sich jeweils in axialer Richtung an der zugewandten Stirnfläche 83 des jeweils benachbarten Anschlussstückes 15, 16 ab. Hierbei liegt eine fluchtende Ausrichtung und ein unmittelbarer Übergang zwischen dem Durchgangskanal 26 und den beiden Fluidkanälen 17 vor.

Zur axial unbeweglichen Fixierung sind die Befestigungsflansche 82 jeweils zwischen zum einen der genannten Stirnfläche 83 und zum anderen der zugeordneten Abstützhülse 67, 68 axial eingespannt. Jede Abstützhülse 67, 68 verfügt im Übergangsbereich zwischen dem Abstützabschnitt 73 und dem Halteabschnitt 74 über eine insbesondere aus einer Abstufung resultierende, axial orientierte ringförmige Spannfläche 84, die den zugeordneten Befestigungsflansch 82 beaufschlagt und gegen das Anschlussstück 15, 16 drückt. Weitere Befestigungsmaßnahmen als diese Klemmverbindung sind zur gehäusefesten Fixierung des Ventilgliedes 25 nicht erforderlich.

Die Klemmverbindung bewirkt gleichzeitig eine fluiddichte Verbindung zwischen dem Ventilglied 25 und jedem der Anschlussstücke 15, 16. Dies kann insbesondere so gelöst werden, dass der Befestigungsflansch 82 an der der Stirnfläche 83 zugewandten Stirnseite über einen koaxialen, ringförmigen Abdichtwulst 85 verfügt, der in eine komplementäre Ringnut in der Stirnfläche 83 des Anschlussstückes 15, 16 eingreift und in diese hineingedrückt wird.

Das Ventilglied 25 ist insbesondere so ausgebildet, dass seine Umfangswand 24 im weder von den Quetschelementen 28a, 28b noch von einem fluidbeaufschlagten Ausgangszustand allein aufgrund seiner inhärenten Formstabilität eine sich ausgehend von den beiden Befestigungsflanschen 82 in Richtung zum Angriffsbereich der Quetschelemente 28a, 28b hin verjüngende Formgebung aufweist. Dies ist aus dem Längsschnitt der Figur 1 gut erkennbar.

Die sich verjüngende Formgebung betrifft zweckmäßigerweise nur die Dimension in Richtung der Arbeitsbewegungen 33. Quer dazu können die Abmessungen durchweg konstant sein oder sich nur minimal ändern.

Beispielsweise kann sich das Ventilglied 25 ausgehend von dem eben erwähnten Angriffsbereich zu beiden Endabschnitten hin trompetenähnlich erweitern.

Diejenigen Wandabschnitte 86 der Umfangswand 24, die von den Quetschelementen 28a, 28b beaufschlagt werden, können eine abgeflachte Gestaltung aufweisen (Figur 3), wobei die Abflachung auch im nicht von den Quetschelementen 28a, 28b beaufschlagten Zustand vorliegt. Dies ist ein Resultat der Realisierung des Ventilgliedes als eigenstabiles Formteil. Als Folge davon ergibt sich von Anfang an in Richtung der Längsachsen 34 ein relativ langer, linearer Kontaktbereich 89 zwischen den Quetschelementen 28a, 28b und der Umfangswand 24. Als Folge davon ergibt sich eine verringerte Verformung der Umfangswand 24 beim Quetschvorgang.

Das als Formteil ausgebildete Ventilglied kann auch in Verbindung mit anderen Quetschventilen eingesetzt werden, die nicht die hier beschriebene Gestaltung aufweisen und bei denen Quetschelemente vorhanden sind, die auf andere Art und Weise aktiviert werden.

Für den Zusammenbau des Quetschventils 1 ist es von Vorteil, wenn die in den Aufnahmekörper 4 einzusetzenden Innereien zu einer aus Figur 6 ersichtlichen patronenartigen Montageeinheit 12 zusammengefasst sind. Diese Montageeinheit wird mit dem der Bodenwand 6 zuzuordnenden Anschlussstück 15 voraus über die Montageöffnung 8 hinweg in den Aufnahmekörper 4 eingeschoben und darin durch Einschrauben des Abschlusselementes 13 gesamthaft fixiert. Um hierbei den Beaufschlagungsring 37 trotz Beaufschlagung durch die Federeinrichtung 65 ortsfest zu fixieren, können quer zur Ventilglied-Längsachse 32 verlaufende Haltestifte 87 zwischen die Abstützeinrichtung 43 und die Beaufschlagungsflügel 45a, 45b eingesetzt werden. Zur formschlüssigen Verankerung der Haltestifte 87 kann die Abstützeinrichtung 43 am Außenumfang je eine tangential verlaufende Verankerungsnut 88 enthalten.

Zweckmäßigerweise werden die Haltestifte 87 erst entfernt, nachdem die Montageeinheit 12 eingesetzt ist. Der Aufnahmekörper 4 kann hierzu im Bereich der umfangsseitigen Ventilgehäusewand 5, die im Übrigen zweckmäßigerweise eine kreiszylindrische Außenkontur besitzt, mit geeigneten Durchbrechungen versehen sein, die aus der Zeichnung nicht ersichtlich sind.

Das Quetschventil verfügt zweckmäßigerweise insgesamt über eine zylindrische Gestaltung und baut somit äußerst kompakt. Durch die koaxiale Anordnung der diversen Komponenten können geringe Radialabmessungen gewährleistet werden, in Verbindung mit einer symmetrischen Krafteinleitung und folglich einer geringen Verschleißanfälligkeit.

## Patentansprüche

1. Quetschventil, mit einem eine flexible Umfangswand (24) aufweisenden und an seinen beiden Enden jeweils einen radial abstehenden Befestigungsflansch (82) aufweisenden schlauchförmigen Ventilglied (25), das einen Durchgangskanal (26) für ein Fluid definiert und im Bereich dessen Außenumfanges zum mehr oder weniger starken Zusammenquetschen der Umfangswand (24) unter Ausführung einer Arbeitsbewegung (33) quer zu der Ventilglied-Längsachse (32) aufeinander zu und voneinander weg bewegbare Quetschelemente (28a, 28b) angeordnet sind, und mit einem das Ventilglied (25) umgreifenden Beaufschlagungsglied, das radial außen über die Quetschelemente (28a, 28b) greifende, zur Ventilglied-Längsachse (32) geneigte Beaufschlagungsflächen (46a, 46b) aufweist und das unter Ausführung einer Beaufschlagungsbewegung (38) längs des Ventilgliedes (25) bewegbar ist, um zum Hervorrufen der Arbeitsbewegung (33) mit seinen Beaufschlagungsflächen (46a, 46b) auf die Quetschelemente (28a, 28b) einzuwirken, wobei das Beaufschlagungsglied ein das Ventilglied (25) koaxial umschließender Beaufschlagungsring (37) ist, der sich in einem ringförmigen, radial außen von einer umfangsseitigen Ventilgehäusewand (5) umschlossenen Arbeitsraum (3) befindet, und wobei bezüglich des Beaufschlagungsrings (37) gesonderte Antriebsmittel (52) vorhanden sind, durch die der Beaufschlagungsring (37) mit einer die Beaufschlagungsbewegung (38) steuernden Antriebskraft beaufschlagbar ist, **dadurch gekennzeichnet, dass** zwei sich bezüglich der Ventilglied-Längsachse (32) diametral gegenüberliegende Quetschelemente (28a, 28b) vorhanden sind, die sich gegenüberliegende Wandabschnitte (36a, 36b) der Umfangswand (24) fluiddicht gegeneinander pressen können, um den Durchgangskanal (26) abzusperren, und dass das Quetschventil zwei jeweils von einem Fluidkanal (17) durchsetzte Anschlussstücke (15, 16) aufweist, zwischen denen sich das schlauchförmige Ventilglied (25) erstreckt, wobei sich das schlauchförmige Ventilglied (25) mit seinen Befestigungsflanschen (82) jeweils axial an dem sich anschließenden Anschlussstück (15, 16) abstützt.

2. Quetschventil nach Anspruch 1, **dadurch gekennzeichnet, dass** die Antriebsmittel (52) für durch Fluidkraft gesteuerten Antrieb des Beaufschlagungsringes (37) ausgebildet sind.

3. Quetschventil nach Anspruch 2, **dadurch gekennzeichnet, dass** die Antriebsmittel eine axial benachbart zu dem Beaufschlagungsring (37) in dem Arbeitsraum (3) ausgebildete, zur Fluidbeaufschlagung geeignete und das Ventilglied (25) koaxial umschließende ringförmige Antriebskammer (58) sowie mindestens einen mit der Antriebskammer (58) kommunizierenden, eine gesteuerte Fluidzufuhr und/oder Fluidabfuhr bezüglich der Antriebskammer (58) ermöglichenden fluidischen Steuerkanal (62) enthalten.

4. Quetschventil nach Anspruch 3, **dadurch gekennzeichnet, dass** der Steuerkanal (62) zur Außenfläche des Ventilgehäuses (2) des Quetschventils ausmündet und seine dortige Kanalmündung (63) mit Anschlussmitteln (64) für eine das Antriebsfluid zu- und/oder abführende Fluidleitung ausgestattet ist, wobei die Kanalmündung (63) zweckmäßigerweise an einer axial orientierten Stirnfläche des Ventilgehäuses (2) angeordnet ist.

5. Quetschventil nach Anspruch 4, **dadurch gekennzeichnet, dass** in dem Arbeitsraum (3) axial zwischen dem Beaufschlagungsring (37) und der Antriebskammer (58) ein durch gesteuerte Fluidbeaufschlagung der Antriebskammer (58) axial beweglicher, ringförmiger Antriebskolben (53) angeordnet ist, der das Ventilglied (25) koaxial umschließt und der mit dem Beaufschlagungsring (37) zum Hervorrufen von dessen Beaufschlagungsbewegung (38) antriebsmäßig zusammenwirken kann.

6. Quetschventil nach Anspruch 5, **dadurch gekennzeichnet, dass** der Beaufschlagungsring (37) ein von dem Antriebskolben (53) unabhängiges, separates Bauteil ist, das sich insbesondere ohne feste Verbindung axial an dem Antriebskolben (53) abstützt.

7. Quetschventil nach einem der Ansprüche 1 bis 6, **dadurch gekennzeichnet, dass** der Beaufschlagungsring (37) einen ringförmigen Grundkörper (44) aufweist, von dem an der den Quetschelementen (28a, 28b) zugewandten Seite zwei Beaufschlagungsflügel (45a, 45b) axial wegragen, an denen die Beaufschlagungsflächen (46a, 46b) angeordnet sind.

8. Quetschventil nach Anspruch 7 in Verbindung mit Anspruch 5 oder 6, **dadurch gekennzeichnet, dass** der Antriebskolben (53) zur Betätigung des Beaufschlagungsrings (37) mit den Beaufschlagungsflügeln (45a, 45b) antriebsmäßig zusammenwirkt.

9. Quetschventil nach Anspruch 8, **dadurch gekennzeichnet, dass** der Antriebskolben (53) die ihm zugewandten Stirnflächen (57) der Beaufschlagungsflügel (45a, 45b) beaufschlagt.

10. Quetschventil nach einem der Ansprüche 1 bis 9, **dadurch gekennzeichnet, dass** in der Arbeitskammer (3) eine, insbesondere mechanische, Federeinrichtung (65) vorhanden ist, die den Beaufschlagungsring (37) in einer axialen Richtung beaufschlagt.

11. Quetschventil nach Anspruch 10, **dadurch gekennzeichnet, dass** die Federeinrichtung (65) in bezüglich des Ventilglieds (25) koaxialer Ausrichtung axial im Anschluss an den Beaufschlagungsring (37) angeordnet ist.

12. Quetschventil nach Anspruch 10 oder 11, **dadurch gekennzeichnet, dass** die Federeinrichtung (65) den Beaufschlagungsring (37) ständig im Sinne eines radialen Zusammenquetschens des Ventilgliedes (25) beaufschlagt.

13. Quetschventil nach einem der Ansprüche 10 bis 12, **dadurch gekennzeichnet, dass** die Federeinrichtung (65) in einer von einem Bestandteil des Arbeitsraumes (3) gebildeten Federkammer (66) untergebracht ist, wobei sich der Beaufschlagungsring (37) axial zwischen der Federkammer (66) und einer zur Betätigung des Beaufschlagungsringes (37) fluidbeaufschlagbaren Antriebskammer (58) befindet.

14. Quetschventil nach einem der Ansprüche 1 bis 13, **dadurch gekennzeichnet, dass** der Arbeitsraum (3) kreiszylindrisch und axial unabgestuft konturiert ist.

15. Quetschventil nach einem der Ansprüche 1 bis 14, **dadurch gekennzeichnet, dass** das schlauchförmige Ventilglied (25), zumindest im Bereich seiner flexiblen Umfangswand (24), von einer hülsenartigen Abstützeinrichtung (43) koaxial umschlossen ist, die einem radialen Aufblähen des Ventilgliedes (25) entgegenwirkt.

16. Quetschventil nach Anspruch 15, **dadurch gekennzeichnet, dass** die Abstützeinrichtung (43) endseitig im Bereich der beiden Anschlussstücke (15, 16) gehalten ist.

17. Quetschventil nach Anspruch 15 oder 16, **dadurch gekennzeichnet, dass** die Abstützeinrichtung (43) zwei unter koaxialer Ausrichtung angeordnete und unter Bildung eines Führungsspaltes (72) axial beabstandete Stützhülsen (67, 68) aufweist, wobei die Quetschelemente (28a, 28b) in dem Führungsspalt (72) bezüglich der Ventilglied-Längsachse (32) radial verschiebbar geführt sind.

18. Quetschventil nach Anspruch 17, **dadurch gekennzeichnet, dass** die beiden Abstützhülsen (67, 68) an ihren einander zugewandten Stirnflächen über je eine erste Linearführungsstruktur (75) verfügen, die mit einer an der zugewandten Seite der Quetschelemente (28a, 28b) angeordneten zweiten Linearführungsstruktur (76) derart in Verschiebeeingriff stehen; dass die Quetschelemente (28a, 28b) in bezüglich der Ventilglied-Längsachse (32) radialer Richtung linear verschiebbar geführt und rechtwinkelig dazu abgestützt sind.

19. Quetschventil nach einem der Ansprüche 1 bis 18, **dadurch gekennzeichnet, dass** die umfangsseitige Ventilgehäusewand (5) über eine kreiszylindrische Außenkontur verfügt.

20. Quetschventil nach einem der Ansprüche 1 bis 19, **dadurch gekennzeichnet, dass** die umfangsseitige Ventilgehäusewand (5) von einem hülsenförmigen Aufnahmekörper (4) gebildet ist, in den die übrigen Ventilkomponenten von einer Stirnseite her eingesetzt sind.

21. Quetschventil nach Anspruch 20, **dadurch gekennzeichnet, dass** mehrere Ventilbestandteile zu einer axial in den Aufnahmekörper (4) einschiebbaren Montageeinheit (12) zusammengefasst sind.

22. Quetschventil nach einem der Ansprüche 1 bis 21, **dadurch gekennzeichnet, dass** sich der Befestigungsflansch (82) an dem zugeordneten Anschlussstück (15, 16) unter gleichzeitigem axialem Abdichteingriff abstützt.

23. Quetschventil nach einem der Ansprüche 1 bis 22, **dadurch gekennzeichnet, dass** das schlauchförmige Ventilglied (25) zumindest im Bereich seiner flexiblen Umfangswand (24) und zweckmäßigerweise gesamthaft als gummielastisches Formteil ausgebildet ist, wobei die Umfangswand (24) im von den Quetschelementen (28a, 28b) nicht beaufschlagten Ausgangszustand allein aufgrund der eigenen Formstabilität eine sich von axial außen her in Richtung zum Angriffsbereich der Quetschelemente (28a, 28b) hin verjüngende Formgebung aufweist.

24. Quetschventil nach Anspruch 23, **dadurch gekennzeichnet, dass** die Umfangswand (24) des Ventilgliedes (25) in den mit den Quetschelementen (28a, 28b) kooperierenden Wandabschnitten (86) eine abgeflachte Gestaltung aufweist.

25. Quetschventil nach einem der Ansprüche 1 bis 24, **dadurch gekennzeichnet, dass** das Ventilglied (25) insgesamt als einstückiges, aus Material mit gummielastischen Eigenschaften bestehendes Formteil ausgebildet ist.

## Claims

1. Pinch valve comprising a tubular valve member (25) having a flexible circumferential wall (24) and a radially projecting mounting flange (82) at each of its two ends, which valve member (25) defines a through-passage (26) for a fluid and in the region of the outer circumference of which valve member (25) pinch elements (28a, 28b) movable towards each other and away from each other are provided for the more or less strong pinching of the circumferential wall (24) while performing an operating movement (33) perpendicular to the longitudinal axis (32) of the valve member, and further comprising a pressurisation member encompassing the valve member (25), which pressurisation member has pressurisation surfaces (46a, 46b) radially overlapping the pinch elements (28a, 28b) on the outside and inclined towards the longitudinal axis (32) of the valve member, and which pressurisation member is movable along the valve member (25) while performing a pressurisation movement (38) in order to act on the pinch elements (28a, 28b) with its pressurisation surfaces (46a, 46b) to cause the operating movement (33), wherein the pressurisation member is a pressurisation ring (37) which coaxially encloses the valve member (25) and which is located in an annular operating chamber (3) radially enclosed on the outside by a circumferential-side valve housing wall (5), and wherein there are provided drive means (52) which are separate with respect to the pressurisation ring (37) and by means of which a drive force controlling the pressurisation movement (38) can be applied to the pressurisation ring (37), **characterised in that** two pinch elements (28a, 28b) located diametrically opposite each other with respect to the longitudinal axis (32) of the valve member are provided, which pinch elements (28a, 28b) are capable of pressing opposite wall sections (36a, 36b) of the circumferential wall (24) against each other in a fluid-tight manner in order to block the through-passage (26), and **in that** the pinch valve comprises two connecting pieces (15, 16) through each of which a fluid passage (17) passes and between which the tubular valve member (25) extends, the tubular valve member (25) being respectively axially supported on the adjoining connecting piece (15, 16) by its mounting flanges (82).

2. Pinch valve according to claim 1, **characterised in that** the drive means (52) are designed for the fluid power-controlled drive of the pressurisation ring (37).

3. Pinch valve according to claim 2, **characterised in that** the drive means comprise an annular drive chamber (58) formed axially adjacent to the pressurisation ring (37) in the operating chamber (3), suitable for fluid pressurisation and coaxially enclosing the valve member (25), as well as at least one fluidic control passage (62) communicating with the drive chamber (58) and/or allowing a controlled fluid supply and/or a controlled fluid discharge with respect to the drive chamber (58).

4. Pinch valve according to claim 3, **characterised in that** the control passage (62) terminates at the outer surface of the valve housing (2) of the pinch valve, where its orifice (63) is provided with connecting means (64) for a fluid line supplying and/or discharging the drive fluid, the orifice (63) of the passage being expediently located at an axially oriented end face of the valve housing (2).

5. Pinch valve according to claim 4, **characterised in that** an annular drive piston (53) which is axially movable by controlled fluid pressurisation of the drive chamber (58), which coaxially encloses the valve member (25) and which can act together with the pressurisation ring (37) in terms of drive to cause its pressurisation movement (38) is located in the operating chamber (3) axially between the pressurisation ring (37) and the drive chamber (58).

6. Pinch valve according to claim 5, **characterised in that** the pressurisation ring (37) is a separate component independent of the drive piston (53) and is in particular axially supported on the drive piston (53) without any fixed connection.

7. Pinch valve according to any of claims 1 to 6, **characterised in that** the pressurisation ring (37) has an annular base body (44) from which two pressurisation wings (45a, 45b) on which the pressurisation surface (46a, 46b) are located project axially on the side facing the pinch elements (28a, 28b).

8. Pinch valve according to claim 7 in combination with claim 5 or 6, **characterised in that** the drive piston (53) acts together with the pressurisation wings (45a, 45b) in terms of drive in order to actuate the pressurisation ring (37).

9. Pinch valve according to claim 8, **characterised in that** the drive piston (53) pressurises the adjacent end faces (57) of the pressurisation wings (45a, 45b).

10. Pinch valve according to any of claims 1 to 9, **characterised in that** an in particular mechanical spring device (65) is provided in the operating chamber (3) for pressurising the pressurisation ring (37) in a axial direction.

11. Pinch valve according to claim 10, **characterised in that** the spring device (65) axially adjoins the pressurisation ring (37) in an orientation which is coaxial with respect to the valve member (25).

12. Pinch valve according to claim 10 or 11, **characterised in that** the spring device (65) continuously applies pressure to the pressurisation ring (37) in the sense of radially pinching the valve member (25).

13. Pinch valve according to any of claims 10 to 12, **characterised in that** the spring device (65) is accommodated in a spring chamber (66) represented by a part of the operating chamber (3), the pressurisation ring (37) being located axially between the spring device (65) and a drive chamber (58) which can be pressurised by fluid to actuate the pressurisation ring (37).

14. Pinch valve according to any of claims 1 to 13, **characterised in that** the operating chamber (3) has a circular cylindrical contour without any steps in the axial direction.

15. Pinch valve according to any of claims 1 to 14, **characterised in that** the tubular valve member (25) is, at least in the region of its flexible circumferential wall (25), coaxially enclosed by a sleeve-like supporting device (43) which acts against a radial expansion of the valve member (25).

16. Pinch valve according to claim 15, **characterised in that** the supporting device (43) is held at the ends in the region of the two connecting pieces (15, 16).

17. Pinch valve according to claim 15 or 16, **characterised in that** the supporting device (43) comprises two supporting sleeves (67, 68) arranged coaxially and at an axial distance while forming a guide gap (72), the pinch elements (28a, 28b) being guided in the guide gap (72) for radial displacement with respect to the longitudinal axis (32) of the valve member.

18. Pinch valve according to claim 17, **characterised in that** each of the two supporting sleeves (67, 68) has at the end face facing the other supporting sleeve a first linear guide structure (75) which is in displacement engagement with a second linear guide structure (76) on the facing side of the pinch elements (28a, 28b) in such a way that the pinch elements (28a, 28b) are guided for linear displacement in the radial direction with respect to the longitudinal axis (32) of the valve member and supported perpendicular thereto.

19. Pinch valve according to any of claims 1 to 18, **characterised in that** the circumferential-side valve housing wall (5) has a circular cylindrical outer contour.

20. Pinch valve according to any of claims 1 to 19, **characterised in that** the circumferential-side valve housing wall (5) is represented by a sleeve-shaped accommodation body (4) into which the other valve components are installed from an end face.

21. Pinch valve according to claim 20, **characterised in that** several valve components are combined to form an assembly (12) which can be inserted axially into the accommodation body (4).

22. Pinch valve according to any of claims 1 to 21, **characterised in that** the mounting flange (82) is supported on the associated connecting piece (15, 16) while simultaneously engaging it axially to form a seal.

23. Pinch valve according to any of claims 1 to 22, **characterised in that** the tubular valve member (25) is designed as a rubber-elastic moulded part at least in the region of its flexible circumferential wall (24) and expediently as a whole, wherein the circumferential wall (24) has, in it initial state when not pressurised by the pinch elements (28a, 28b), owing to its intrinsic dimensional stability a shape which tapers axially from the outside towards the application region of the pinch elements (28a, 28b).

24. Pinch valve according to claim 23, **characterised in that** the circumferential wall (24) of the valve member (25) has a flattened shape in the wall sections (86) co-operating with the pinch elements (28a, 28b).

25. Pinch valve according to any of claims 1 to 24, **characterised in that** the valve member (25) as a whole is designed as a single-piece mounded part made of a material having rubber-elastic properties.

## Revendications

1. Vanne à manchon avec un organe de vanne (25) tubulaire présentant sur ses deux extrémités respectivement une bride de fixation (82) dépassant radialement et présentant une paroi périphérique flexible (24), lequel organe définit un canal de passage (26) pour un fluide et des éléments de manchon (28a, 28b) pouvant s'approcher et s'éloigner l'un de l'autre sont disposés dans la zone de sa périphérie extérieure pour le serrage plus ou moins fort de la paroi périphérique (24) en réalisant un mouvement de travail (33) transversalement à l'axe longitudinal d'organe de vanne (32), et avec un organe d'alimentation entourant l'organe de vanne (25) qui présente des surfaces d'alimentation (46a, 46b) inclinées vers l'axe longitudinal de l'organe de vanne (32) et recouvrant les éléments de manchon (28a, 28b) radialement à l'extérieur, et qui peut être déplacé en réalisant un mouvement d'alimentation (38) le long de l'organe de vanne (25) afin d'agir sur les éléments de manchon (28a, 28b) pour susciter le mouvement de travail (33) avec ses surfaces d'alimentation (46a, 46b), l'organe d'alimentation étant un anneau d'alimentation (37) entourant coaxialement l'organe de vanne (25), qui se trouve dans un espace de travail (3) annulaire entouré radialement à l'extérieur par une paroi de boîtier de vanne côté périphérie (5), et des moyens d'entraînement (52) séparés par rapport à l'anneau d'alimentation (37) étant présents, par lesquels l'anneau d'alimentation (37) peut être alimenté en une force d'entraînement commandant le mouvement d'alimentation (38), **caractérisée en ce que** deux éléments de manchon (28a, 28b) diamétralement opposés par rapport à l'axe longitudinal d'organe de vanne (32) sont présents, lesquels peuvent presser des sections de paroi (36a, 36b) opposées de la paroi périphérique (24) de manière étanche au fluide l'une contre l'autre afin de bloquer le canal de passage (26) et **en ce que** la vanne à manchon présente deux pièces de raccordement (15, 16) traversées respectivement par un canal fluidique (17), entre lesquelles l'organe de vanne (25) tubulaire s'étend, l'organe de vanne (25) tubulaire s'appuyant avec ses brides de fixation (82) respectivement axialement contre la pièce de raccordement (15, 16) contiguë.

2. Vanne à manchon selon la revendication 1, **caractérisée en ce que** les moyens d'entraînement (52) sont réalisées pour l'entraînement commandé par la force fluidique de l'anneau d'alimentation (37).

3. Vanne à manchon selon la revendication 2, **caractérisée en ce que** les moyens d'entraînement contiennent une chambre d'entraînement (58) annulaire entourant coaxialement l'organe de vanne (25) et appropriée à l'alimentation fluidique, réalisée de manière axialement contiguë à l'anneau d'alimentation (37) dans l'espace de travail (3) ainsi qu'au moins un canal de commande (62) fluidique permettant une amenée et/ou une évacuation de fluide commandée par rapport à la chambre d'entraînement (58), communiquant avec la chambre d'entraînement (58).

4. Vanne à manchon selon la revendication 3, **caractérisée en ce que** le canal de commande (62) débouche vers la surface extérieure du boîtier de vanne (2) de la vanne à manchon et son débouché de canal qui s'y trouve (63) est équipé de moyens de raccordement (64) pour une conduite de fluide amenant et/ou évacuant le fluide d'entraînement, le débouché de canal (63) étant disposé de manière appropriée sur une surface avant orientée axialement du boîtier de soupape (2).

5. Vanne à manchon selon la revendication 4, **caractérisée en ce qu'**un piston d'entraînement (53) annulaire, mobile axialement par alimentation fluidique commandée de la chambre d'entraînement (58) est disposé dans l'espace de travail (3) axialement entre l'anneau d'alimentation (37) et la chambre d'entraînement (58), lequel piston entoure coaxialement l'organe de vanne (25) et peut coagir en entraînement avec l'anneau d'alimentation (37) pour susciter son mouvement d'alimentation (38).

6. Vanne à manchon selon la revendication 5, **caractérisée en ce que** l'anneau d'alimentation (37) est un composant séparé indépendant du piston d'entraînement (53), qui s'appuie en particulier sans liaison fixe axialement contre le piston d'entraînement (53).

7. Vanne à manchon selon l'une quelconque des revendications 1 à 6, **caractérisée en ce que** l'anneau d'alimentation (37) présente un corps de base (44) annulaire, duquel deux ailes d'alimentation (45a, 45b) dépassent axialement sur le côté tourné vers les éléments de manchon (28a, 28b), sur lesquelles ailes les surfaces d'alimentation (46a, 46b) sont disposées.

8. Vanne à manchon selon la revendication 7 en liaison avec la revendication 5 ou 6, **caractérisée en ce que** le piston d'entraînement (53) coagit en entraînement pour l'actionnement de l'anneau d'alimentation (37) avec les ailes d'alimentation (45a, 45b).

9. Vanne à manchon selon la revendication 8, **caractérisée en ce que** le piston d'entraînement (53) alimente les surfaces avant (57) tournées vers celui-ci des ailes d'alimentation (45a, 45b).

10. Vanne à manchon selon l'une quelconque des revendications 1 à 9, **caractérisée en ce qu'**un dispositif à ressort (65) en particulier mécanique est présent dans la chambre de travail (3), lequel alimente l'anneau d'alimentation (37) dans un sens axial.

11. Vanne à manchon selon la revendication 10, **caractérisée en ce que** le dispositif à ressort (65) est disposé dans une orientation coaxiale par rapport à l'organe de vanne (25) axialement à la suite de l'anneau d'alimentation (37).

12. Vanne à manchon selon la revendication 10 ou 11, **caractérisée en ce que** le dispositif à ressort (65) alimente l'anneau d'alimentation (37) en permanence au sens d'un serrage radial de l'organe de vanne (25).

13. Vanne à manchon selon l'une quelconque des revendications 10 à 12, **caractérisée en ce que** le dispositif à ressort (65) est logé dans une chambre de ressort (66) formée par un élément de l'espace de travail (3), l'anneau d'alimentation (37) se trouvant axialement entre la chambre de ressort (66) et une chambre d'entraînement (58) pouvant être alimentée en fluide pour l'actionnement de l'anneau d'alimentation (37).

14. Vanne à manchon selon l'une quelconque des revendications 1 à 13, **caractérisée en ce que** l'espace de travail (3) présente un contour circulaire et cylindrique et non échelonné axialement.

15. Vanne à manchon selon l'une quelconque des revendications 1 à 14, **caractérisée en ce que** l'organe de vanne (25) tubulaire est entouré coaxialement au moins dans la zone de sa paroi périphérique flexible (24), d'un dispositif d'appui (43) de type douille qui agit contre un gonflement radial de l'organe de vanne (25).

16. Vanne à manchon selon la revendication 15, **caractérisée en ce que** le dispositif d'appui (43) est maintenu côté extrémité dans la zone des deux pièces de raccordement (15, 16).

17. Vanne à manchon selon la revendication 15 ou 16, **caractérisée en ce que** le dispositif d'appui (43) présente deux douilles d'appui (67, 68) espacées axialement en formant une fente de guidage (72) et disposées sous orientation coaxiale, les éléments de manchon (28a, 28b) étant guidés de manière mobile radialement dans la fente de guidage (72) par rapport à l'axe longitudinal d'organe de vanne (32).

18. Vanne à manchon selon la revendication 17, **caractérisée en ce que** les deux douilles d'appui (67, 68) disposent, sur leurs surfaces avant tournées l'une vers l'autre, d'une première structure de guidage linéaire (75) qui sont en engagement mobile avec une seconde structure de guidage linéaire (76) disposée sur le côté tourné des éléments de manchon (28a, 28b) de telle manière que les éléments de manchon (28a, 28b) soient guidés de manière mobile linéairement dans le sens radial par rapport à l'axe longitudinal d'organe de vanne (32) et soient en appui à angle droit par rapport à celui-ci.

19. Vanne à manchon selon l'une quelconque des revendications 1 à 18, **caractérisée en ce que** la paroi de boîtier de vanne (5) côté périphérie dispose d'un contour extérieur circulaire et cylindrique.

20. Vanne à manchon selon l'une quelconque des revendications 1 à 19, **caractérisée en ce que** la paroi de boîtier de vanne (5) côté périphérie est constituée d'un corps de réception (4) en forme de douille, dans lequel les composants de vanne restants sont insérés par un côté avant.

21. Vanne à manchon selon la revendication 20, **caractérisée en ce que** plusieurs éléments de vanne sont réunis pour former une unité de montage (12) insérable axialement dans le corps de réception (4).

22. Vanne à manchon selon l'une quelconque des revendications 1 à 21, **caractérisée en ce que** la bride de fixation (82) s'appuie contre la pièce de raccordement (15, 16) associée sous engagement étanche axial simultané.

23. Vanne à manchon selon l'une quelconque des revendications 1 à 22, **caractérisée en ce que** l'organe de vanne (25) tubulaire est réalisé au moins dans la zone de sa paroi périphérique flexible (24) et de manière appropriée dans l'ensemble comme une pièce moulée caoutchouteuse, la paroi périphérique (24) présentant, dans l'état de départ non alimenté par les éléments de manchon (28a, 28b), seulement en raison de sa propre stabilité de forme, un formage se rétrécissant depuis l'extérieur axialement en direction de la zone d'application des éléments de manchon (28a, 28b).

24. Vanne à manchon selon la revendication 23, **caractérisée en ce que** la paroi périphérique (24) de l'organe de vanne (25) présente une forme aplatie dans les sections de paroi (86) coopérant avec les éléments de manchon (28a, 28b).

25. Vanne à manchon selon l'une quelconque des revendications 1 à 24, **caractérisée en ce que** l'organe de vanne (25) est réalisé dans l'ensemble comme une pièce moulée d'un seul tenant, se composant de matériau aux propriétés caoutchouteuses.
